# EUROPEAN PATENT APPLICATION

(11) **EP 1 855 338 A1**
(43) Date of publication of application: **14.11.2007**
(21) Application number: 06711589.9
(22) Date of filing: 12.01.2006
(51) Int. Cl.: H01M 8/02, H01M 8/12, H01M 8/24

(54) **FLAT LAMINATE TYPE FUEL CELL AND FUEL CELL STACK**

(30) Priority: 19.01.2005 JP 2005011244; 03.08.2005 JP 2005225468
(71) Applicant: Mitsubishi Materials Corporation, Tokyo 100-0004 (JP); THE KANSAI ELECTRIC POWER CO., INC., Osaka-shi, Osaka 530-8270 (JP)
(72) Inventor: MURAKAMI, Naoya, CRINRC, Mitsubishi Mat. Corp., Naka-shi, Ibaraki 311-0102 (JP); KOTANI, Takafumi, CRINRC, Mitsubishi Mat. Corp., Naka-shi, Ibaraki 311-0102 (JP); KOMADA, Norikazu, CRINRC, Mitsubishi Mat. Corp., Naka-shi, Ibaraki 311-0102 (JP)
(74) Representative: Gillard, Richard Edward
(86) International application number: PCT/JP2006/300266
(87) International publication number: WO 2006/077762

(57) **Abstract**

A flat plate laminated type high-temperature fuel cell, with internal manifold structure, has a laminated body constructed by alternately laminating power generation cells (5) and separators (8), and by applying a load to the laminated body in the laminating direction to compress elements of the laminated body. Each separator (8) has a connecting section (8b) for connecting a manifold section (8a) of the separator (8) and a section (8c) at which the power generation cell (5) is located, and the connecting section (8b) has flexibility to the load. Thus, it is possible to improve adhesiveness in the power generating section of the fuel cell stack and gas seal performance in the manifold section. Further, each of separators (108) has through-holes (122) extending in the laminating direction, and a fixing rod (123) is inserted into each of the through-holes (122) for restricting movements of the separators (108) in a plane direction due to thermal strain in operation. Thus, the movements of the separators due to thermal strain under high temperature atmosphere at power generation can be restricted and damage to the power generation cells can be prevented.

## Description

### Technical Field

The present invention relates to a flat plate laminated type fuel cell, particularly to a flat plate laminated type fuel cell which can secure both of adhesiveness in power generating sections of a laminated body and gas seal performance in a manifold section. Further, the present invention relates to a fuel cell stack, specifically to a fixing structure for preventing displacement of a separator in the plane (or, lateral) direction due to thermal strain under high temperature atmosphere in operation (at the time of power generation).

### Background Art

Recently, a fuel cell, which directly converts chemical energy of fuel into electric energy, has drawn attention as a clean and efficient power generating device. The fuel cell has a laminated structure in which a solid electrolyte layer made of an oxide ion conductor is sandwiched between an air electrode (cathode) layer and a fuel electrode (anode) layer.

At the time of power generation, oxidant gas (air) is supplied to the air electrode side of the power generation cell, and fuel gas (H₂, CO, CH₄ or the like) is supplied to the fuel electrode side, as reactant gases. Both the air electrodes and fuel electrodes are made porous so that the reactant gases can reach their boundary with the solid electrolyte.

In the power generation cell, the oxygen supplied to the air electrode layer side reaches near the boundary with the solid electrolyte layer through the pore in the air electrode layer, and there, the oxygen receives an electron from the air electrode layer to be ionized to oxide ion (O²⁻). The oxide ion is diffusively moved in the solid electrolyte layer in the direction of the fuel electrode layer. When reaching near the boundary with the fuel electrode layer, the oxide ion reacts there with fuel gas to produce a reaction product (H₂O, CO₂ and the like), and emits an electron to the fuel electrode layer. The electrons produced by the electrode reaction are taken out as an electromotive force by an external load on another route.

The flat plate laminated type fuel cell is constructed by alternately laminating power generation cells and separators to form a stack structure, and then by applying a load in the laminating direction from both ends of the stack so that elements of the stack are pressure bonded and closely overlapped to each other.
The separator has a function of electrically connecting the power generation cells to each other and of supplying reactant gas to the power generation cell. In the separator, a fuel gas passage which introduces fuel gas to the fuel electrode layer side, and an oxidant gas passage which introduces oxidant gas to the air electrode layer side are provided. Such a flat plate laminated type fuel cell is disclosed in, for example, Patent Document 1.

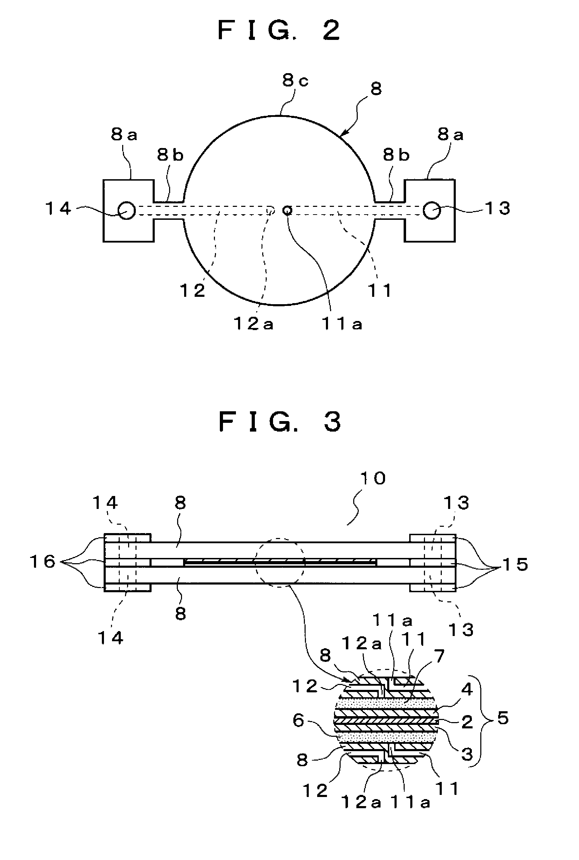

As configurations for supplying an external reactant gas to the separators, following structures are known: a structure in which an external manifold is provided on the circumference of the fuel cell stack and each gas is supplied to each of the separators through a plurality of connecting pipes as shown in the Patent Document 1; and a structure, as shown in Fig. 7, in which gas openings 13, 14 are formed on the peripheral portion of each separator 8 made of a stainless steal plate having a thickness of a few millimeters or the like and fuel gas and oxidant gas are supplied from the gas openings 13, 14 to each electrode surface of the power generation cell through gas passages 11, 12.
In the internal manifold, the gas openings of any two adjacent separators 8 are in communication with each other through ring-shaped insulating gaskets 15, 16 interposed between the separators, as shown in Fig. 3.

The flat plate laminated type fuel cell has a structure in which a power generation cell is constructed by laminating a plurality of power generation elements, and the thus formed power generation cells are laminated through a conductive member such as a separator, therefore, excellent adhesiveness between elements is required for securing stable fuel cell performance. Especially, in case of the internal manifold, gas seal performance in the gasket portions, as well as adhesiveness between elements, are required.
Accordingly, the flat plate laminated type fuel cell adopts a structure in which the elements are pressure bonded by applying a load in the laminating direction from both ends of the stack after the stack is built-up. For example, in Patent document 1, the load is applied to the laminated body by cramping stacking plates located both ends of the stack with bolts.

However, particularly in case of the internal manifold structure, laminated elements in the power generating section located at the center of the stack are different from those in the manifold section located at the peripheral of the stack. Accordingly, when the manifold section and the power generating section are cramped from the top and bottom of the stack with the use of the stacking plates, separator plates with high stiffness are cramped such that displacement in the peripheral portion of the separator is the same as that in the center portion of the separator. As a result, cramping force in each section is deficient due to difference in height between the sections, resulting in another problem that adhesiveness between the elements is deteriorated.
Consequently, in the power generating section, electrical contact resistance is increased due to contact failure, and it leads to the deterioration of power generating performance and efficiency. Further, in the manifold section, seal performance between the gaskets and the gas openings are deteriorated, and degradation of power generating performance are caused by gas leakage.

However, there is fear that excessive cramping stimulates high temperature creep of the elements, and causes damage to the power generation cells. Therefore, cramping force on the stack is preferably kept necessity minimum for securing electrical contact performance in the power generating section and gas seal performance in the manifold section.

Such a laminated type fuel cell is also disclosed in Patent Document 2,referred to presently. Patent Document 2 shows a fuel cell stack mounted on vehicles (car bodies) and constructed by horizontally laminating fuel cells through separators. The fuel cell stack is fixed by fixing rods disposed in the laminating direction of the laminated body in order to prevent the fuel cells and separators from moving or opening due to vibration or impact at the time of driving the vehicle, since the fuel cell stack is transversely-situated when used.

As mentioned above, the flat plate laminated type fuel cell has a structure in which a power generation cell is constructed by laminating a plurality of power generation elements, and a plurality of the power generation cells are laminated through a conductive member such as a separator, therefore, excellent adhesiveness between elements is required for securing stable fuel cell performance. Accordingly, the flat plate laminated type fuel cell typically adopts a structure in which the elements are pressure bonded by applying a load in the laminating direction from both ends of the stack after the stack is built-up. For example, stacking plates are provided on both ends of the stack, and the load is applied to the laminated body by cramping the stacking plates with bolts and nuts.

However, according to the loading structure described above, depending on thermal expansion coefficient of the separator, especially in case of the separator made of metal, there is a problem that the separator is easily displaced in itself toward the direction along the surface thereof (hereinafter referred to as a plane direction) due to thermal strain under high temperature atmosphere at the time of power generation, and stress toward the plane direction acts on the fuel cell between the separators to cause damage (crack) to the fuel cell.
Patent document 1: Japanese Patent Laid-Open No. 2004-55195
Patent document 2: Japanese Patent Laid-Open No. 2002-56882

### Disclosure of the Invention

The first object of the present invention is to provide a flat plate laminated type fuel cell which can improve adhesiveness in a power generating section of a fuel cell stack and gas seal performance in a manifold section.
The second object of the present invention is to provide a reliable fuel cell stack which can prevent damage to fuel cells due to thermal stress by restricting the movements of the separators in the plane direction due to thermal strain under high temperature atmosphere at the time of power generation.

### [First aspect of the present invention]

In order to achieve the first object, a flat plate laminated type high-temperature fuel cell according to the first aspect of the present invention comprises: a laminated body constructed by alternately laminating power generation cells and separators having a reactant gas passage, and a reactant gas introducing internal manifold which is in communication with the gas passage of each separator and penetrates the inside of the laminated body in the laminating direction, wherein the fuel cell is constructed by applying a load to the laminated body in the laminating direction to compress elements of the laminated body, and wherein a connecting section for connecting a manifold section of the separator and a section at which the power generation cell is located has a suitable flexibility to the load given to the laminated body.

In the flat plate laminated type high-temperature fuel cell, it is preferable that at least a part of the connecting section is narrowed and thinned, or the connecting section is formed to have an elongated strip shape extending along the peripheral portion of the separator. The connecting section is preferably treated with a heat insulating material or coat.

Furthermore, in the flat plate laminated type high-temperature fuel cell described above, it is preferable that the load is separately applied to each of the manifold section and the section at which the power generation cell is located, from both ends of the laminated body.

It should be appreciated that the flat plate laminated type high-temperature fuel cell referred to herein has an operating temperature of above 500 °C, more specifically, a fuel cell having an operating temperature of from 500 °C to1200°C. In the flat plate laminated type high-temperature fuel cell as described above, the load applied to the separator can be dispersed into the manifold section and the section at which the power generation cell is located, so that variation in height between the manifold section and the section at which the power generation cell is located can be absorbed and the load can be certainly applied to both of the sections. As a result, reciprocal adhesiveness of the power generating elements of the laminated body and gas seal performance in the manifold section can be improved and power generating performance and efficiency can be enhanced.

Further, heating and cooling of the reactant gas in the process of passing through the connecting section can be suppressed by the thermal insulating treatment in the connecting section using an insulating material or coat, thus, the reactant gases are supplied to the power generation cell at an optimal temperature as of introduction into the manifold, whereby the temperature in the power generating section is stabilized, and adhesiveness of the power generating elements is enhanced.

Furthermore, an optimal load can be applied to each of the manifold section and the section at which the power generation cell is located, by adding weight to each section of the separator respectively from both ends of the laminated body. As a result, a further improvement is enhanced in both adhesiveness of the power generating elements of the laminated body and gas seal performance in the manifold section.

As described above, according to the flat plate laminated type high-temperature fuel cell of the first aspect of the present invention, the connecting section for connecting the manifold section of the separator and the section at which the power generation cell is located has suitable flexibility to the load and, therefore, the load applied to the separator can be dispersed into both the manifold section and the section at which the power generation cell is located. Thus, variation in height between the manifold section and the section at which the power generation cell is located can be absorbed and both the sections can be tightened up with an optimal load.
As a result, adhesiveness of the power generating elements of the laminated body and gas seal performance in the manifold section can be improved and power generating performance and efficiency can be enhanced.

### [Second aspect of the present invention]

In order to achieve the second object, a fuel cell stack according to the second aspect of the present invention is constructedby:alternatelylaminatingpower generation cells and separators to form a laminated body; and applying a load to the laminated body in the laminating direction, wherein each of the separators has a plurality of the through-holes penetrating thereof in the laminating direction, and a fixing rod is inserted into each of the through-holes for restricting movements of the separators in the plane direction due to thermal strain in operation.

In the fuel cell stack, the power generation cells and the separators are laminated, for instance, in the vertical direction. In the fuel cell stack, it is preferable that thermal expansion coefficient of the fixing rod is smaller than that of the separator. In addition, alumina or silica is preferably used as a material of the fixing rod.

According to the fuel cell stack of the second aspect of the present invention, the fixing rod is inserted into each of the multiply-laminated separators so as to restrict movements of the separators in the plane direction due to thermal strain, Thus, it is possible to prevent thermal stress under high temperature atmosphere in operation from acting upon the power generation cells which are pressure bonded and sandwiched between the separators, so that damage to the power generation cells can be prevented.

### Brief Description of the Drawings

Figure 1A is a top plan view showing a configuration of a flat plate laminated type solid oxide fuel cell according to the present invention;
Figure 1B is a side view of the flat plate laminated type solid oxide fuel cell shown in Fig. 1A;
Figure 2 is a view showing a structure of a separator according to the present invention;
Figure 3 is a view showing a configuration of a unit cell according to the present invention;
Figure 4 is a view showing another structure of the separator shown in Fig. 2;
Figure 5A is a plan view showing a configuration of a fuel cell stack according to the present invention;
Figure 5B is a side view showing the fuel cell stack shown in Fig. 5A;
Figure 6 is a sectional view taken along Line A-A of Fig. 5B; and
Figure 7 is a view showing a configuration of a conventional separator.

### Description of the reference numerals

- 1: Laminated body (Fuel cell stack)
- 5: Power generation cell
- 8: Separator
- 8a: Manifold section
- 8b: Connecting section
- 8c: Section at which the power generation cell is located
- 11, 12: Gas passages (Fuel gas passage, Oxidant gas passage)
- 101: Fuel cell stack (Solid oxide fuel cell)
- 105: Power generation cell
- 109: Separator
- 122: Through-hole
- 123: Fixing rod

### Best Mode for Carrying Out the Invention

### [First embodiment]

The first embodiment of the present invention will be described below with reference to the drawings.

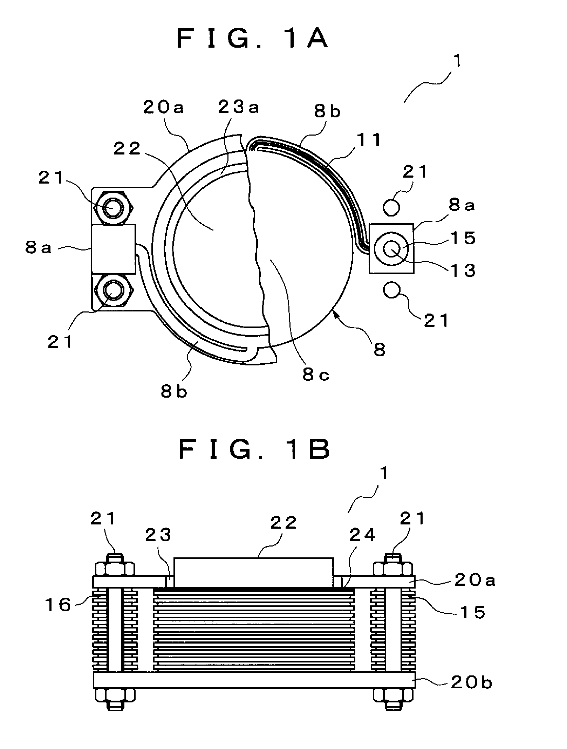

Figs. 1A and 1B show a configuration of a flat plate laminated type high-temperature solid oxide fuel cell according to the present invention; Fig. 2 shows a configuration of a separator according to the present invention; and Fig. 3 shows a configuration of a unit cell according to the present invention.
It is noted that the flat plate laminated type high-temperature solid oxide fuel cell includes a fuel cell having an operating temperature of above 500 °C, more specifically, from 500 °C to 1200 °C.

As shown in Fig. 3, a unit cell 10 comprises a power generation cell 5 in which a fuel electrode layer 3 and an air electrode layer 4 are arranged on both surfaces of a solid electrolyte layer 2, a fuel electrode current collector 6 on the outer side of the fuel electrode layer 3, an air electrode current collector 7 on the outer side of the air electrode layer 4, and separators 8 on the outer side of each of the current collectors 6, 7.

Among power generating elements mentioned above, the solid electrolyte layer 2 is formed of stabilized zirconia (YSZ) doped with yttria, and the like. The fuel electrode layer 3 is formed of a metal such as Ni, Co, or a cermet such as Ni-YSZ, Co-YSZ. The air electrode layer 4 is formed of LaMnO₃, LaCoO₃ and the like. The fuel electrode current collector 6 is formed of a sponge-likeporous sintered metallic plate such as a Ni-based alloy, and the air electrode current collector 7 is formed of a sponge-like porous sinteredmetallic plate such as an Ag-based alloy. The separator 8 is formed of stainless steel and the like.

In this embodiment, the separator 8 is made of a stainless steel plate having a thickness of 2 mm to 3 mm. The separator 8 has a function of electrically connecting the power generation cells. 5 to each other and of supplying reactant gas to the power generation cell 5, and is provided with a fuel gas passage 11 which introduces fuel gas from an outer peripheral part of the separator 8 and which discharges the fuel gas from a center portion 11a of a surface facing the fuel electrode current collector 6, and with an oxidant gas passage 12 which introduces oxidant gas from an outer peripheral part of the separator 8 and which discharges the oxidant gas from a center portion 12a of a surface facing the air electrode current collector 7.

In addition, two gas openings 13, 14 extending through the separator 8 in the thickness direction are formed at opposite sides of the outer peripheral part of the separator 8. Among these openings, one opening 13 is in communication with the fuel gas passage 11, and the other opening 14 is in communication with the oxidant gas passage 12. That is, fuel and oxidant gases can be supplied on each electrode surface of the power generation cell 5 from corresponding gas openings 13, 14 through the gas passages 11, 12. The gas openings of any two vertically-adjacent separators 8 are in communication with each other through ring-shaped insulating gaskets 15 and 16.

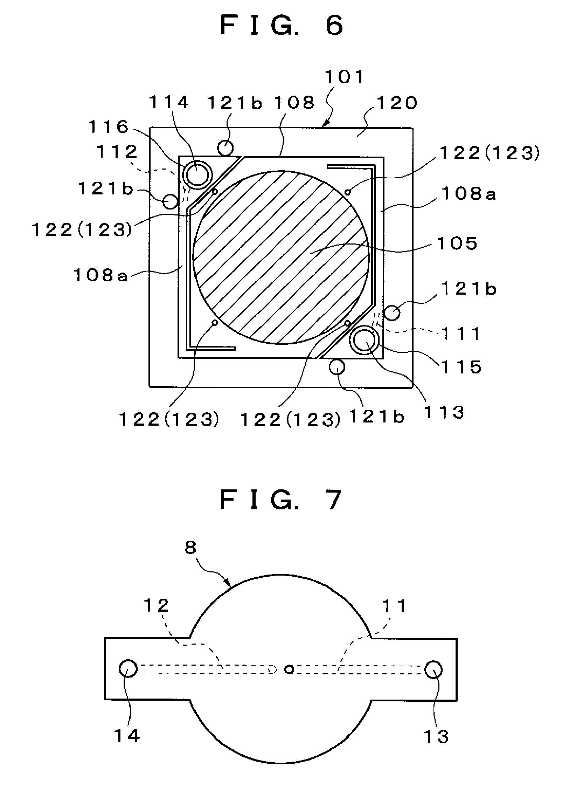

As shown in Fig. 2, the separator in this embodiment has a structure in which connecting sections 8b, 8b for connecting each of manifold sections 8a, 8a located at both sides of the separator 8 to a center section 8c at which the power generation cell 5 is located are narrowed and thinned so as to have a certain level of flexibility to a load in the laminating direction, so that the load acted on the separator 8 after the stack is assembled is divided into the manifold sections 8a and the section 8c at which the power generation cell 5 is located. In this regard, the separator in this embodiment is different from a conventional separator (Fig. 7) having high stiffness as a whole.

It is likely that variation in height between the manifold section 8a located at the peripheral portion of the separator 8 and the center section 8c at which the power generation cell 5 is located may occur in the process of laminating and assembling the power generating elements. In the present invention, however, a suitable flexibility is provided to the connecting sections to absorb the variation in height, and the load is certainly applied to each of the sections 8a, 8c. Namely, the load is applied separately to each of the sections 8a, 8c without affecting each other.
As a result, reciprocal adhesiveness of the power generating elements of the laminated body and gas seal performance of the gasket portion can be improved to enhance power generating performance and efficiency.

The flat plate laminated type fuel cell stack 1 shown in Figs. 1A and 1B is constructed by laminating the unit cells 10 in order, with the gaskets 15, 16 interposed between the unit cells 10. Stacking plates 20a, 20b are disposed on the top and bottom ends of the fuel cell stack 1.
The upper stacking plate 20a has a donut-shape, and when arranged on the top end of the stack, the center section thereof, that is, the section 8c at which the power generation cell is located is exposed through the center opening 23. On the other hand, the lower stacking plate 20b has a circular plate shape and supports the bottom of the stack from underneath.

As shown in Figs. 1A and 1B, the stacking plates 20a, 20b are disposed on the top and bottom ends of the fuel cell stack 1, and the peripheral portions of the stacking plates 20a, 20b are tightened (cramped) with bolts 21, whereby the gas openings 13, 14 of the separator 8 and the gaskets 15, 16 are connected and bonded mechanically and firmly to each other mainly at the manifold sections 8a, 8a of each layer of the stack, by the strong tightening load. Two series of manifolds: a fuel gas tubular manifold and an oxidant gas tubular manifold, each of which is extending in the laminating direction within the stack, are formed by connecting respective gaskets 15, 16 in the laminating direction through the gas openings 13, 14 of the separator 8 with the tightening load.
At the time of power generation, fuel and oxidant gases externally supplied flow within respective tubular manifolds, and are distributed and introduced to the electrode surfaces of the power generation cells 5 from the gas openings 13, 14 of the separator 8 through the gas passages, respectively.

A weight 22 is positioned at the center portion of the upper stacking plate 20a (a portion where the opening 23 is formed) through a peripheral member 24. A plurality of power generating elements of the unit cell 10 are adhered firmly to each other and fixed integrally by pushing the center portion 8c of the separator 8 with the load of the weight 22 in the laminating direction.
Since the fuel electrode current collector 6 and the air electrode current collector 7 interposed between the separators 8 are formed of sponge-like porous sintered metallic plates, they are resiliently deformed by the load of the weight 22, and are in the state of being pressure bonded and cramped between above and below separators 8 with a certain level of elastic force.
Hence, it is possible to secure desirable electrical contact between power generating elements, and to minimize damage to the power generating elements due to the load, even in case that the load of the weight 22 on the power generating section is extremely reduced compared to the strong tightening load of the bolts 21 on the manifold sections 8a.

As described above, the fuel cell stack 1 according to the present invention has a structure in which an optimal load is applied to the manifold sections 8a of the separator 8 and the section 8c at which the power generation cell 5 is located, with no influence on the other sections. Consequently, it is possible to improve and secure both of adhesiveness between the power generating elements of the stack and gas seal performance in the manifold sections 8a.

Such a loading structure becomes feasible by providing flexibility to the connecting sections 8b of the separator 8. In this embodiment, the separator 8, in which the connecting sections 8b are formed to have an elongated strip shape, is used as shown in Fig. 1A.
In the separator 8 of Fig. 1A, as in the case of the separator 8 shown in Fig. 2, flexibility against the load is provided to the connecting section 8b between the manifold section 8a and the section 8c, at which the power generation cell 5 is located. In this embodiment, by forming each connecting section 8b as a long strip shape along the separator 8, it is possible to attain the advantages that excellent flexibility is obtained without reducing the thickness of the connecting sections 8b compared to the other portion as in Fig. 2 and that the separator 8 in itself can be downsized.

It is preferable that the load applied to the fuel cell stack 1 in the laminating direction is set to the minimum necessary for securing electrical contact between the power generating elements and gas seal performance in the gaskets, keeping in mind creep of the elements under atmospheric temperatures of 500-1200 °C. In this embodiment, the load on the manifold section 8a located at the peripheral portion is set around several hundreds kgf, and the load on the power generating section 8c located at the center portion is set around several kgf.

Further, thermal insulating treatment using a thermal insulating material or a thermal insulating coat (not shown) can be applied to the surface of the connecting section 8b of the separator 8 in Figs. 1A and 2. By the thermal insulating treatment on the connecting sections 8b, heating and cooling of the reactant gas in the process of passing through the connecting sections 8b can be suppressed, thus, the reactant gas is supplied to the power generation cell 5 at an optimal temperature as of introduction into the manifold, so that the temperature in the power generating section 8c is stabilized, and adhesiveness of the power generating elements is enhanced.

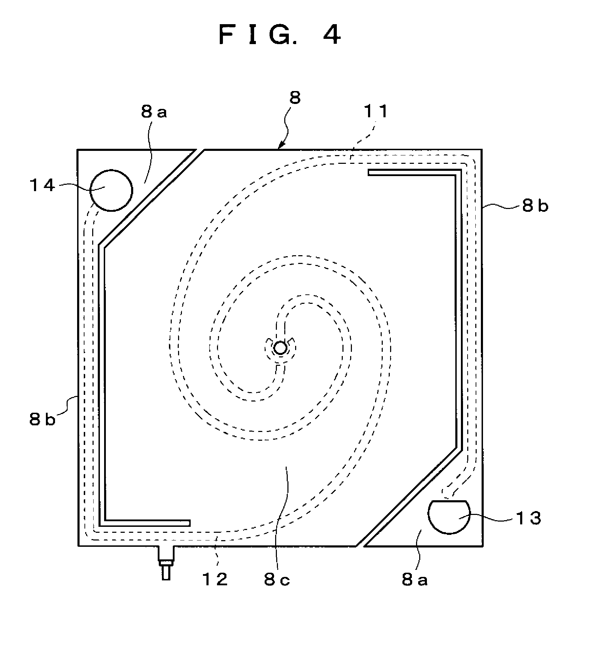

In this embodiment, the separator 8 with disk shape is used. However, the shape of the separator is not limited thereto, and a separator 8 with rectangular shape as shown in Fig. 4 may be used. In this case, connecting sections 8b between manifold sections 8a and a section 8c at which the power generation cell 5 is located are formed to have an elongated strip shape to obtain flexibility to the load. Needless to say, thermal insulating treatment may be applied to the connecting sections 8b as well.

As shown in Fig. 4, fuel gas passage 11 and oxidant gas passages 12, in which reactant gases flow, are formed in whorl and in nested state so as not to intersect with each other within the separator 8. Hence, reactant gases introduced into the separator 8 exchange heat efficiently with the separator 8 in the process of distribution within entire area of the separator 8 through the gas passages 11, 12 formed in whorl, so that the separator 8 is heated evenly throughout all area in the plane direction. Therefore, temperature of the power generating section 8c is stabilized, and adhesiveness in the power generating elements is further enhanced.

### [Second embodiment]

The second embodiment of the present invention will be described below with reference to the drawings.

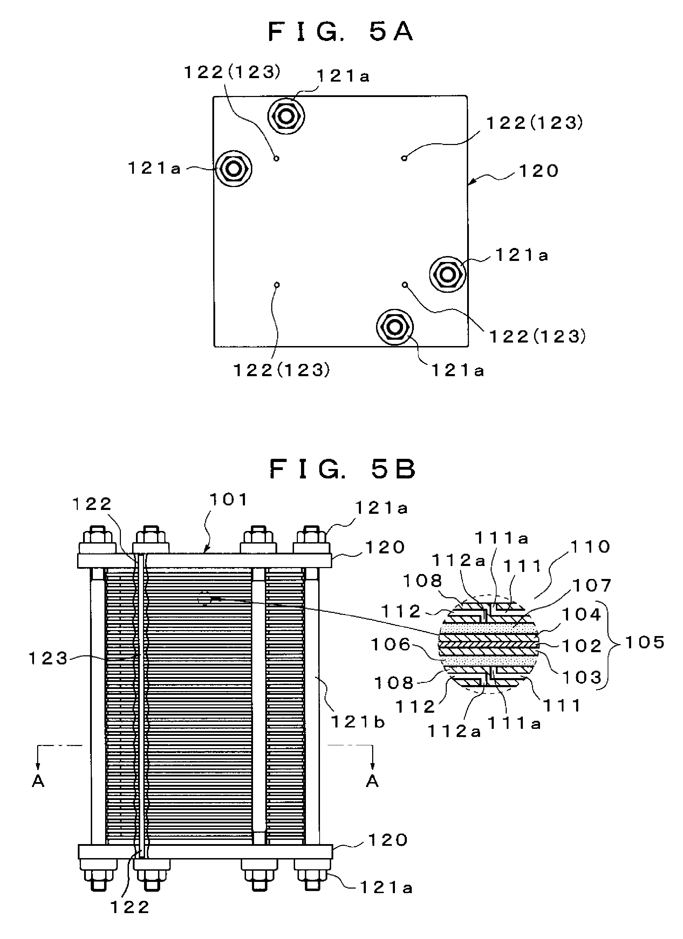

Figs. 5A and 5B show a configuration of a flat plate laminated type solid oxide fuel cell (a fuel cell stack) according to the present invention, and Fig. 6 is a sectional view taken along Line A-A of Fig. 5B.

As with the first embodiment, a unit cell 110 shown in Fig. 5B comprises a circular power generation cell 105 in which a fuel electrode layer 103 and an air electrode layer 104 are arranged on both surfaces of a solid electrolyte layer 102, a fuel electrode current collector 106 on the outer side of the fuel electrode layer 103, an air electrode current collector 107 on the outer side of the air electrode layer 104, and separators 108 on the outer side of each of the current collectors 106, 107.

Among power generating elements mentioned above, the solid electrolyte layer 102 is formed of stabilized zirconia (YSZ) doped with yttria, and the like. The fuel electrode layer 103 is formed of a metal such as Ni, or a cermet such as Ni-YSZ. The air electrode layer 104 is formed of LaMnO₃, LaCoO₃ and the like. The fuel electrode current collector 106 is formed of a sponge-like porous sintered metallic plate such as Ni, and the air electrode current collector 107 is formed of a sponge-like porous sintered metallic plate such as Ag.

The separator 108 is made of a rectangular stainless steel plate, and at the center portion thereof, the power generation cell 105 is located, as shown in Fig. 6. The separator 108 has a function of electrically connecting the power generation cells 105 to each other and of supplying reactant gas to the power generation cell 105, and has a fuel gas passage 111 in which fuel gas flows and an oxidant gas passage 112 in which oxidant gas flows.

In addition, the separator 108 has two gas openings 113, 114 at the diametrically opposed corners thereof, such that the gas openings 113, 114 are extended in the thickness direction. Among these openings, one opening 113 is in communication with the fuel gas passage 111, and the other opening 114 is in communication with the oxidant gas passage 112. That is, fuel and oxidant gases are introduced from corresponding gas openings 113, 114 to the gas passages 111, 112 and discharged on each electrode surface of the power generation cell 105 from gas discharge ports 111a, 112a. As a result, power generating reaction occurs on each electrode of the power generation cell 105.
The gas openings of any two adjacent separators 108 in laminating direction are in communication with each other through ring-shapad insulating gaskets 115 and 116.

As shown in Fig. 6, the separator 108 in this embodiment has connecting sections 108a, 108a for connecting each of lateral end sections where the gas openings 113, 114 are formed and a center section where the power generation cell 105 is located, and each of the connecting sections 108a, 108a is formed in long strip shape so as to have a certain level of flexibility to a load as described below, so that variation in height between the peripheral section and the center section of the separator caused in the process of laminating and assembling elements of the stack is absorbed, and the load is applied evenly to the whole surface of the separator. Consequently, adhesiveness of the power generating elements of the laminated body and gas seal performance of the gasket portions can be improved.

The fuel cell stack 101 shown in Fig. 6 has a structure in which the unit cells 110 described above are multiply laminated through the gaskets 115, 116, and stacking plates 120, 120 made of rectangular stainless steal plate are placed on the top and bottom ends of the fuel cell stack 101 and tightened at four points of the peripheral portion thereof by bolts 121b and nuts 121a, whereby elements of the stack is adhered integrally and firmly to each other with the tightening load. Two series of the manifolds: a fuel gas introducing tubular manifold and an oxidant gas introducing tubular manifold, each of which is extending in the laminating direction within the stack, are formed by connecting respective gaskets 115, 116 in the laminating direction through the gas openings 113, 114 of each separator 108 with the tightening load.

As stated previously, in the conventional flat plate laminated type fuel cell stack, there is a problem that when thermal strain arises in the separator 108, by Joule heat generated in the power generation cell 105 in the process of power generation, a horizontal stress acts on the power generation cell 105 due to the displacement of the separator 108 in the plane direction which causes damage (crack) to the power generation cell 105.

In the present invention, as shown in Figs. 5A, 5B and 6, each of the upper and lower stacking plates 120, 120 and the separators 108 sandwiched between the stacking plates 120, 120 has through-holes 122, and a fixing rod 123 is inserted into each of the through-holes 122 in the laminating direction of the laminated body (vertical direction) to restrict movements of the separators in the plane direction caused by thermal strain, so that the damage to the power generation cell 105 due to the thermal stress is prevented.

In this embodiment, each separator 108 has four through-holes 122 diametrically opposed each other near a circumference thereof such that the through-holes 122 surround the section, at which the power generation cell 105 is located, on the surface of the separator 108, and the fixing rod 123 is inserted into each of the through-holes 122. The inner diameter of the through-hole 122 is set 3.5 ϕ, and the outer diameter of the fixing rod 123 inserted into the through-hole 123 is set 3 ϕ.

These fixing rods 123 are inserted from the through-holes 122 of the upper stacking plate 120, and lower ends of which are supported by the lower stacking plate 120. That is, all of the fixing rods 123 are freely and loosely fitted into respective through-holes 122. Thus, the fixing rods 123 do not contribute to any load in the laminating direction of the laminated body, but serves to restrict only the movements of the separators 108 in the plane direction.

As a material of the fixing rod 123, a material which has insulating performance, high heat resistance, and low thermal expansion coefficient compared to that of a separator material (stainless steel), such as alumina or silica is used for example.
The thermal expansion coefficient of the fixing rod 123 is set lower than that of the separator 108 for the purpose of eliminating a mechanical influence of thermal strain of the fixing rods 123 on the separators 108 at the time of the power generation, and insulating rod is used for the fixing rod 123 for avoiding a short circuit between the separators due to the presence of the fixing rods 123.

The number of the through-holes 122 formed in one plane is not limited to four. At least three through-holes are required on the same plane, and by providing three through-holes, it becomes possible to reliably restrict the movements of the separators 108 in the plane direction. In case of providing three through-holes 122, they are preferably arranged near the circumference of the separator at even intervals (at each vertex of regular triangle) to surround the section at which the power generation cell 105 is located.

According to the fixing structure of the fuel cell stack 101 using the fixing rods 123, since the fixing rods 123 penetrate through the multiple laminated separators 108 to restrict the movements of the separators 108 in the plane direction, that is, displacement of the separators 108 due to thermal strain in the power generating process, it is possible to prevent thermal stress under high temperature atmosphere at the time of the power generation from acting upon the power generation cells 105 which are pressure bonded and sandwiched between the separators 108. Accordingly, damage to the power generation cells 105 can be prevented. Therefore, the life span of the power generation cells 105 can be extended, and a reliable fuel cell stack 101 having stable power generating performance can be obtained.

### Industrial Applicability

According to the present invention, it becomes possible to improve adhesiveness in the power generating section of a fuel cell stack, and gas seal performance in the manifold section, and also to provide a reliable fuel cell stack which can prevent any damages to fuel cells that may be caused by thermal stress.

## Claims

1. A flat plate laminated type high-temperature fuel cell comprising:
a laminated body constructed by alternately laminating power generation cells and separators each having a reactant gas passage; and
a reactant gas introducing internal manifold which is in communication with the gas passage of each separator and penetrates within the laminated body in the laminating direction,
wherein the fuel cell is constructed by applying a load to the laminated body in the laminating direction to compress elements of the laminated body; and
wherein each of the separators includes a manifold section, a section at which the power generation cell is located, and a connecting section for connecting the manifold section and the section at which the power generation cell is located, the connecting section having flexibility against the load.

2. The flat plate laminated type high-temperature fuel cell according to claim 1, wherein at least a part of the connecting section is narrowed and thinned.

3. The flat plate laminated type high-temperature fuel cell according to claim 1, wherein the connecting section is formed to have an elongated strip shape extending along the peripheral of the separator.

4. The flat plate laminated type high-temperature fuel cell according to claim 1, wherein the connecting section is treated with a heat insulating material or a heat insulating coat.

5. The flat plate laminated type high-temperature fuel cell according to claim 1, wherein the load is separately applied to each of the manifold section and the section at which the power generation cell is located, from both ends of the laminated body.

6. The flat plate laminated type high-temperature fuel cell according to claim 1, wherein each of the separators has a plurality of through-holes extending in the laminating direction thereof, and a fixing rod inserted into each of the through-holes for restricting movements of the separators in a plane direction due to thermal strain in operation.

7. A flat plate laminated type fuel cell stack comprising:
a laminated body having alternately laminated power generation cells and separators,
wherein the fuel cell stack is constructed by applying a load to the laminated body in the laminating direction; and
wherein each of the separators has a plurality of through-holes extending in the laminating direction thereof, and a fixing rod inserted into each of the through-holes for restricting movements of the separators in a plane direction due to thermal strain in operation.

8. The fuel cell stack according to claim 7, wherein the power generation cells and separators are laminated in a vertical direction.

9. The fuel cell stack according to claim 7, wherein thermal expansion coefficient of the fixing rod is lower than that of the separator.

10. The fuel cell stack according to claim 7, wherein alumina or silica is used as a material of the fixing rod.
